# EUROPEAN PATENT APPLICATION

(11) **EP 4 654 662 A1**
(43) Date of publication of application: **26.11.2025**
(21) Application number: 23921699.7
(22) Date of filing: 14.02.2023
(51) Int. Cl.: H04W 36/00

(54) **COMMUNICATION METHOD AND APPARATUS**

(71) Applicant: Huawei Technologies Co., Ltd., Shenzhen, Guangdong 518129 (CN)
(72) Inventor: HUANG, Huanhuan, Shenzhen, Guangdong 518129 (CN); PENG, Chenghui, Shenzhen, Guangdong 518129 (CN); WANG, Jun, Shenzhen, Guangdong 518129 (CN); WANG, Fei, Shenzhen, Guangdong 518129 (CN); LIU, Zhe, Shenzhen, Guangdong 518129 (CN)
(74) Representative: MERH-IP Matias Erny Reichl Hoffmann Patentanwälte PartG mbB
(86) International application number: PCT/CN2023/075974
(87) International publication number: WO 2024/168531

(57) **Abstract**

Embodiments of this application provide a communication method and apparatus, and relate to the field of communication technologies, to resolve a problem of establishing, by a terminal, a connection to a previous task anchor after a connection anchor of the terminal is switched. The method includes: A target access apparatus receives first information, where the first information includes information about a task apparatus and information about the terminal; and determines, based on the first information, the task apparatus corresponding to the terminal.

## Description

### TECHNICAL FIELD

This application relates to the field of communication technologies, and in particular, to a communication method and apparatus.

### BACKGROUND

An existing 5th generation mobile communication technology (5th Generation Mobile Communication Technology, 5G) is mainly oriented to connection services. Task features are added in a 6th generation mobile communication technology (6th Generation Mobile Communication Technology, 6G), which, for example, can be used to execute tasks such as computing, artificial intelligence (Artificial Intelligence, AI) training, and AI reasoning. A common task scenario may include that user equipment (User Equipment, UE) requests a base station to execute a task, or a base station requests UE to execute a task, where the base station may be referred to as a task anchor. For example, in a scenario in which the UE requests the base station to execute a task, the base station can allocate, based on a task size configured by the UE, a computing power resource of the base station, a load status of a surrounding node, and the like, the task to a plurality of nodes for execution. After task execution is completed, the base station can collect task results obtained by the nodes, and send the task results to the UE.

However, as a location of the UE changes, a base station connected to the UE (namely, a connection anchor) may be switched to maintain a connection service of the UE. In other words, the UE may change the connection anchor. However, to ensure quality of service of the task, the task anchor may remain unchanged. Therefore, there is an implementation scenario in which the connection anchor is separate from the task anchor. In this case, after the base station connected to the UE is switched, a new connection anchor cannot obtain information about the previous task anchor of the UE. In this case, the UE cannot communicate with the task anchor for task result interaction.

For example, in a scenario in which the UE requests a base station 1 to execute a task, or a base station 1 requests the UE to execute a task, it is assumed that an initial connection anchor of the UE is the base station 1, and the connection anchor of the UE is subsequently switched. For example, the UE is handed over to a base station 2, and then is handed over to a base station 3. In this case, the task anchor of the UE remains unchanged and is still the base station 1. In this case, the task anchor needs to send an obtained task result to the UE, or the UE needs to send an obtained task result to the task anchor. Therefore, how to implement communication between the task anchor and the UE is an urgent problem to be resolved.

### SUMMARY

Embodiments of this application provide a communication method and apparatus, to resolve a problem of establishing, by a terminal, a connection to a previous task anchor after a connection anchor of the terminal is switched.

To achieve the foregoing objective, the following technical solutions are used in this application.

According to a first aspect, a communication method is provided. The method is applied to a target access apparatus and includes: receiving first information, where the first information includes information about a task apparatus and information about a terminal; and determining, based on the first information, the task apparatus corresponding to the terminal.

In the foregoing implementation, when the terminal is handed over from a source access apparatus to a target access apparatus, the information about the task apparatus may be indicated to the target access apparatus by using the first information, so that the target access apparatus can determine the task apparatus corresponding to the terminal, and implement task result interaction between the terminal and the task apparatus. For example, a task result obtained by the terminal may be forwarded to the corresponding task apparatus, to improve communication efficiency.

In an implementation, the method further includes: sending second information to the task apparatus based on the first information, where the second information includes information about the target access apparatus and the information about the terminal.

In the foregoing implementation, the target access apparatus may send the second information to the task apparatus based on the information, about the task apparatus, obtained from the first information, to indicate the information about the target access apparatus, so that the task apparatus can determine the target access apparatus corresponding to the terminal, and implement task result interaction between the terminal and the task apparatus. For example, a task result obtained by the task apparatus may be forwarded to the corresponding terminal, to improve communication efficiency.

In an implementation, the first information is from the source access apparatus of the terminal.

In an implementation, the first information is carried in a handover request message, or carried in a context message of the terminal. The source access apparatus may send the first information to the target access apparatus. For example, the first information may be carried in the handover request message or the context message of the terminal, to reduce signaling overheads.

In an implementation, the first information is from the terminal.

In an implementation, the first information is carried in a radio resource control RRC resume request message. The first information may be sent by the terminal to the target access apparatus. For example, the first information may be carried in the RRC resume request message, to reduce signaling overheads.

In an implementation, the method further includes: receiving the task result from the task apparatus; and sending the task result to the terminal.

In the foregoing implementation, after receiving the task result from the task apparatus, the target access apparatus may send the task result to the terminal corresponding to the task apparatus by querying stored information about a correspondence between the terminal and the task apparatus, to complete a task execution procedure, and improve communication efficiency and flexibility of the task execution procedure.

In an implementation, the method further includes: receiving the task result from the terminal; and sending the task result to the task apparatus.

In the foregoing implementation, after receiving the task result from the terminal, the target access apparatus may send the task result to the task apparatus corresponding to the terminal by querying stored information about a correspondence between the terminal and the task apparatus, to complete a task execution procedure, and improve communication efficiency and flexibility of the task execution procedure.

In an implementation, the information about the task apparatus includes identification information of the task apparatus or an Internet protocol IP address of the task apparatus.

In an implementation, the source access apparatus or the target access apparatus includes a cluster node configured to implement a device access function, and the task apparatus includes a cluster node configured to implement a task function.

According to a second aspect, a communication method is provided. The method includes: A first communication apparatus determines first information, where the first information includes information about a task apparatus and information about a terminal; and sends the first information to a target access apparatus corresponding to the terminal.

In an implementation, the first communication apparatus is the terminal, or a source access apparatus corresponding to the terminal.

In an implementation, the first information is carried in a handover request message, or carried in a context message of the terminal, or carried in a radio resource control RRC resume request message, or carried in a task result generated by the terminal.

In an implementation, if the first communication apparatus is the source access apparatus, the method further includes: The source access apparatus sends second information to the task apparatus, where the second information includes information about the target access apparatus and the information about the terminal.

In an implementation, the information about the apparatus includes identification information of the apparatus or an Internet protocol IP address of the apparatus.

In an implementation, the source access apparatus or the target access apparatus includes a cluster node configured to implement a device access function, and the task apparatus includes a cluster node configured to implement a task function.

According to a third aspect, a communication method is provided. The method is applied to a task apparatus and includes: receiving second information; and obtaining information about a target access apparatus and information about a terminal that are included in the second information.

In an implementation, receiving the second information specifically includes: receiving the second information from the target access apparatus; or receiving the second information from a source access apparatus.

In an implementation, the method further includes: sending a request message to a mobility management function, where the request message includes the information about the terminal and indicates to obtain the information about the target access apparatus corresponding to the terminal. Receiving the second information specifically includes: receiving the second information from the mobility management function.

In the foregoing implementation, the task apparatus may send the request message to the mobility management function, to indicate to request to obtain, from the mobility management function, the information about the target access apparatus corresponding to the terminal, so that the mobility management function can determine the information about the corresponding target access apparatus by querying the information about the terminal and send the information to the task apparatus. In this way, the task apparatus can communicate with the target access apparatus, to improve communication efficiency and flexibility of a task execution procedure.

In an implementation, the information about the target access apparatus includes identification information of the target access apparatus or an Internet protocol IP address of the target access apparatus.

In an implementation, the source access apparatus or the target access apparatus includes a cluster node configured to implement a device access function, and the task apparatus includes a cluster node configured to implement a task function.

In an implementation, the method further includes: obtaining a task result corresponding to the terminal; and sending the task result to the terminal.

According to a fourth aspect, a communication method is provided. The method is applied to a mobility management function and includes: receiving a request message from a task apparatus, where the request message includes information about a terminal and indicates to obtain information about a target access apparatus corresponding to the terminal; and sending, to the task apparatus, the information about the target access apparatus corresponding to the terminal.

In an implementation, the information about the target access apparatus includes identification information of the target access apparatus or an Internet protocol IP address of the target access apparatus.

According to a fifth aspect, a communication method is provided. The method is applied to a terminal. The terminal is configured to implement a task requested by a task apparatus. The terminal is handed over from a source access apparatus to a target access apparatus. The method includes: obtaining a task result corresponding to the task apparatus; and sending the task result to the target access apparatus, where the task result includes information about the task apparatus and information about the terminal.

In an implementation, the task result further includes identification information of the task.

In an implementation, the information about the task apparatus includes identification information of the task apparatus or an Internet protocol IP address of the task apparatus.

According to a sixth aspect, a communication system is provided. The communication system includes a source access apparatus, a target access apparatus, and a task apparatus. The source access apparatus or a terminal is configured to send first information to the target access apparatus, where the first information includes information about the task apparatus and information about the terminal, and the terminal is handed over from the source access apparatus to the target access apparatus. The target access apparatus is configured to determine, based on the first information, the task apparatus corresponding to the terminal.

In an implementation, the target access apparatus is further configured to send second information to the task apparatus based on the first information, and the second information includes information about the target access apparatus and the information about the terminal.

In an implementation, if the source access apparatus sends the first information, the first information is carried in a handover request message, or carried in a context message of the terminal.

In an implementation, the communication system further includes the terminal. If the terminal sends the first information, the first information is carried in a radio resource control RRC resume request message.

In an implementation, the task apparatus is further configured to send, to the target access apparatus, a task result corresponding to the terminal. The target access apparatus is further configured to send the task result to the terminal.

In an implementation, the communication system further includes the terminal. The terminal is configured to: obtain a task result corresponding to the task apparatus, and send the task result to the target access apparatus. The target access apparatus sends the task result to the task apparatus.

In an implementation, the communication system further includes a mobility management function. The task apparatus is configured to send a request message to the mobility management function, where the request message includes the information about the terminal and indicates to obtain the information about the target access apparatus corresponding to the terminal. The mobility management function is used to send, to the task apparatus, the information about the target access apparatus corresponding to the terminal.

In an implementation, the information about the apparatus includes identification information of the apparatus or an Internet protocol IP address of the apparatus.

According to a seventh aspect, a communication apparatus is provided. The communication apparatus includes: a communication module, configured to receive first information, where the first information includes information about a task apparatus and information about a terminal; and a processing module, configured to determine, based on the first information, the task apparatus corresponding to the terminal.

In an implementation, the communication module is further configured to send second information to the task apparatus based on the first information, where the second information includes information about the communication apparatus and information about the terminal.

In an implementation, the first information is from a source access apparatus of the terminal.

In an implementation, the first information is carried in a handover request message, or carried in a context message of the terminal.

In an implementation, the first information is from the terminal.

In an implementation, the first information is carried in a radio resource control RRC resume request message.

In an implementation, the communication module is further configured to: receive a task result from the task apparatus, and send the task result to the terminal.

In an implementation, the communication module is further configured to: receive a task result from the terminal, and send the task result to the task apparatus.

In an implementation, the information about the task apparatus includes identification information of the task apparatus or an Internet protocol IP address of the task apparatus.

In an implementation, the source access apparatus or the communication apparatus includes a cluster node configured to implement a device access function, and the task apparatus includes a cluster node configured to implement a task function.

According to an eighth aspect, a communication apparatus is provided. The communication apparatus includes: a processing module, configured to determine first information, where the first information includes information about a task apparatus and information about a terminal; and a communication module, configured to send the first information to a target access apparatus corresponding to the terminal.

In an implementation, the communication apparatus is the terminal, or a source access apparatus corresponding to the terminal.

In an implementation, the first information is carried in a handover request message, or carried in a context message of the terminal, or carried in a radio resource control RRC resume request message, or carried in a task result generated by the terminal.

In an implementation, if the communication apparatus is the source access apparatus, the communication module is further configured to send second information to the task apparatus, where the second information includes information about the target access apparatus and the information about the terminal.

In an implementation, the information about the apparatus includes identification information of the apparatus or an Internet protocol IP address of the apparatus.

In an implementation, the source access apparatus or the target access apparatus includes a cluster node configured to implement a device access function, and the task apparatus includes a cluster node configured to implement a task function.

According to a ninth aspect, a communication apparatus is provided. The communication apparatus includes: a communication module, configured to receive second information; and a processing module, configured to obtain information about a target access apparatus and information about a terminal that are included in the second information.

In an implementation, the communication module is specifically configured to receive the second information from the target access apparatus, or receive the second information from a source access apparatus.

In an implementation, the communication module is configured to: send a request message to a mobility management function, where the request message includes information about the terminal and indicates to obtain the information about the target access apparatus corresponding to the terminal; and receive the second information from the mobility management function.

In an implementation, the information about the target access apparatus includes identification information of the target access apparatus or an Internet protocol IP address of the target access apparatus.

In an implementation, the source access apparatus or the target access apparatus includes a cluster node configured to implement a device access function, and the task apparatus includes a cluster node configured to implement a task function.

In an implementation, the communication module is further configured to: obtain a task result corresponding to the terminal; and send the task result to the terminal.

According to a tenth aspect, a communication apparatus is provided. The communication apparatus includes: a communication module, configured to receive a request message from a task apparatus, where the request message includes information about a terminal and indicates to obtain information about a target access apparatus corresponding to the terminal; and send, to the task apparatus, the information about the target access apparatus corresponding to the terminal.

In an implementation, the information about the target access apparatus includes identification information of the target access apparatus or an Internet protocol IP address of the target access apparatus.

According to an eleventh aspect, a communication apparatus is provided. The communication apparatus is configured to implement a task requested by a task apparatus. The communication apparatus is handed over from a source access apparatus to a target access apparatus. The communication apparatus includes: a processing module, configured to obtain a task result corresponding to the task apparatus; and a communication module, configured to send the task result to the target access apparatus, where the task result includes information about the task apparatus and information about the communication apparatus.

In an implementation, the task result further includes identification information of the task.

In an implementation, the information about the task apparatus includes identification information of the task apparatus or an Internet protocol IP address of the task apparatus.

According to a twelfth aspect, a communication apparatus is provided. The communication apparatus includes a processor. The processor is coupled to a memory. The memory is configured to store a computer program or instructions. The processor is configured to execute the computer program or the instructions stored in the memory, to enable the apparatus to perform the method according to any one of the first aspect, the second aspect, the third aspect, the fourth aspect, or the fifth aspect.

According to a thirteenth aspect, a computer-readable storage medium is provided, including a program or instructions. When the program or the instructions are run by a processor, the method according to any one of the first aspect, the second aspect, the third aspect, the fourth aspect, or the fifth aspect is performed.

According to a fourteenth aspect, a computer program product is provided. When the computer program product is run on a computer, the computer is enabled to perform any one of the possible implementations of the first aspect, the second aspect, the third aspect, the fourth aspect, or the fifth aspect.

According to a fifteenth aspect, a communication system is provided. The communication system includes the communication apparatus according to the seventh aspect and the communication apparatus according to the eighth aspect.

In an implementation, the communication system further includes the communication apparatus according to the ninth aspect.

In an implementation, the communication system further includes the communication apparatus according to the tenth aspect.

In an implementation, the communication system further includes the communication apparatus according to the eleventh aspect.

According to a sixteenth aspect, a chip or a circuit is provided, and is configured to perform the method in any one of the possible implementations in any one of the first aspect to the fifth aspect.

It may be understood that any communication method, apparatus, communication apparatus, communication system, computer program product, computer-readable storage medium, chip, circuit, or the like provided above may be implemented by using the corresponding method provided above. Therefore, for beneficial effects that can be achieved by the communication method, the apparatus, the communication apparatus, the communication system, the computer program product, the computer-readable storage medium, the chip, the circuit, or the like, refer to beneficial effects in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of an architecture of another communication system according to an embodiment of this application;
FIG. 4 is a diagram of a structure of a communication apparatus according to an embodiment of this application;
FIG. 5 is a schematic flowchart of a communication method according to an embodiment of this application;
FIG. 6 to FIG. 13 are schematic flowcharts of communication methods according to embodiments of this application; and
FIG. 14 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first", "second", and the like mentioned below are merely intended for a purpose of description, and shall not be understood as an indication or implication of relative importance or implicit indication of the quantity of indicated technical features. Therefore, a feature limited by "first", "second", or the like may explicitly or implicitly include one or more features.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise specified and limited, the term "connection" should be understood in a broad sense. For example, the "connection" may be a fixed connection, a detachable connection, an integration, a direct connection, or an indirect connection by using an intermediate medium.

First, an implementation environment and an application scenario of embodiments of this application are briefly described.

A network architecture and an application scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to a similar technical problem.

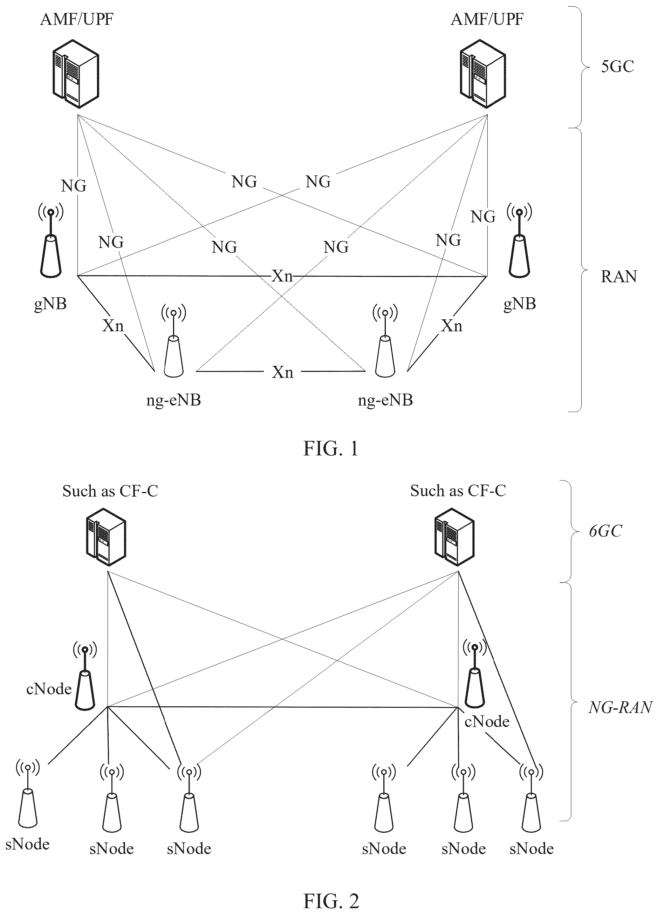

Embodiments of this application are applicable to 5G, 6G, a next generation wireless communication system, or the like. FIG. 1 shows an architecture of a 5G wireless network. As shown in FIG. 1, the 5G wireless network includes an access network (Radio Access Network, RAN) and a 5G core network (5G Core Network, 5GC). Sometimes, an access network device in this application is also referred to as an access node. The access network device has a wireless transceiver function, and is configured to communicate with a terminal. The access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device or a module of an access network device in an open access network (open RAN, ORAN) system, a base station in a future mobile communication system, an access node in a Wi-Fi system, or the like.

Alternatively, the access network device may be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

In an implementation, an O-CU, an O-DU, a RAN intelligent controller (RAN Intelligent Controller, RIC) near-real-time (near-real-time, near-RT) function, or the like in the ORAN system may be used to implement steps performed by a task apparatus in embodiments of this application.

In an implementation, an O-CU, an O-DU, an RIC near-RT function, or the like in the ORAN system may be used to implement steps performed by a source access apparatus in embodiments of this application.

In an implementation, an O-CU, an O-DU, an RIC near-RT function, or the like in the ORAN system may be used to implement steps performed by a target access apparatus in embodiments of this application.

It should be noted that "the source access apparatus sends information to the terminal" in embodiments of this application may be understood as that a destination end of the information is the terminal, and may include that the source access apparatus directly or indirectly sends the information to the terminal. For example, the source access apparatus directly sends the information to the terminal, or the source access apparatus sends the information to the terminal based on forwarding by another access apparatus or relay device. Similarly, "the source access apparatus receives information from the terminal" may be understood as that a source end of the information is the terminal, and may include that the source access apparatus directly or indirectly receives the information from the terminal.

FIG. 2 shows an architecture of a 6G wireless network. The 6G wireless network also includes an access network RAN and a 6G core network (6G Core Network, 6GC).

For example, the access network RAN includes a base station. In a 6G system, base stations may be classified into two types: cluster nodes (cluster Nodes, cNodes) and service nodes (service Nodes, sNodes). The cNode is a region-level centralized coordination node of a plurality of service nodes, and provides a connection- and task-related signaling interaction function and an anchor function. The sNode is a service node that provides data functions of task scheduling, execution, and connection, and is configured to provide functions such as data forwarding.

The base station is a radio base station in a network, and is also a network element in a radio access network, and is responsible for all functions related to an air interface. In systems using different radio access technologies, names of devices having a base station function may be different.

The base station may send a signal to a terminal device, or may receive a signal from a terminal device.

Small base station (micro/pico gNB/NodeB): The small base station is functionally similar to a base station, but herein it means a small or micro station.

Transmission reception point (transmission reception point, TRP): The transmission reception point is a short name of a base station. The transmission reception point may receive a signal sent by a terminal device, and/or send a signal to the terminal device.

Terminal: The terminal is UE or a mobile station, and may be vehicle-mounted, portable, handheld, or the like. A physical device and a mobile user may be completely independent of each other. All user-related information may be stored in a subscriber identity module (Subscriber Identity Module, SIM)/card, and the smart card may be used on the mobile station. The terminal may complete direct air interface interaction with a base station, and the terminal may send a signal and/or receive a signal.

Core network: The core network is mainly used to provide a user connection and user management, and complete service bearing, and serves as a bearer network to provide an interface to an external network. Establishment of the user connection includes functions such as mobility management (mobility management, MM), calling management (calling management, CM), switching/routing, and recording notification (completing a connection to an intelligent network peripheral device with reference to an intelligent network service). User management mainly includes user descriptions, quality of service (quality of service, QoS) (where descriptions of user service QoS are added), user communication accounting (Accounting), a virtual home environment (virtual home environment, VHE) (providing a virtual home environment through a conversation with an intelligent platform), and security (where an authentication center provides corresponding security measures, including security management for mobile services and security processing for external network access). Bearer connections (Access to) include an external public switched telephone network (public Switched Telephone Network, PSTN), an external circuit data network and packet data network, Internet (Internet) and an intranet (Intranet), a short message service (Short Message Service, SMS) server, and the like. Basic services that may be provided by the core network include a mobile office, e-commerce, communication, an entertainment service, a travel and location-based service, a telemetry (Telemetry) service, a simple message transfer service (monitoring and control), and the like.

Implementation solutions of this application mainly relate to communication between UE and a base station, communication between base stations, and communication between a base station and a core network. A message may be sent between the UE and the base station through a radio air interface (Uu interface), and a protocol stack of the radio air interface includes a control plane (control plane) protocol and a user plane (user plane) protocol. The control plane performs signaling interaction, and the user plane performs data interaction.

Task resource control (Task Resource Control, TRC) on the control plane is an enhancement of a radio resource control (Radio Resource Control, RRC) layer in a 5G protocol stack. In TRC, control functions of tasks such as artificial intelligence (Artificial Intelligence, AI), computing, and data processing are added on the basis of an existing radio resource control function. A task resource scheduler (Task Resource Scheduler, TRS) on the user plane is an evolution that enhances a media access control (Medium Access Control, MAC) layer in the 5G protocol stack. For example, a computing power scheduling function is added on the basis of an existing air interface resource scheduling function at the MAC layer. In addition, a task resource data (Task Resource Data, TRD) layer is added above a service data adaptation protocol (Service Data Adaptation Protocol, SDAP) layer, to provide functions such as task-related AI training, inference, and model processing.

In addition, for communication between base stations, a communication interface between base stations in a 5G system is an Xn interface, and a communication interface between base stations in a 6G system is a Yn interface. For communication between a base station and a core network, a communication interface between a base station and a core network in the 5G system is an NG interface, and a communication interface between a base station and a core network in the 6G system is a Tx interface and a Ty interface.

In an implementation, for UE in a connected (CONNECTED) state, when the UE moves, for example, moves to a cell of a new base station, a cell handover procedure is triggered. The cell handover procedure mainly includes the following steps: The base station delivers measurement configuration to the UE. The UE performs measurement based on the measurement configuration and reports a measurement result. The base station determines, based on the measurement result, whether to perform handover. If the UE performs handover, a source base station (Source gNB) may send a handover request (handover request) message to a target base station (Target gNB), where the request message may include a connection-related control message, for example, a target cell identifier (Identifier, ID), a protocol data unit (Protocol Data Unit, PDU) session-related message, and a UE function. The target base station performs admission control, and sends a handover request acknowledgment message to the source base station. Then, the source base station may send an RRC reconfiguration message to the UE, and the UE is handed over to a new cell, and then sends an RRC reconfiguration completion message to the target base station. After cell handover of the UE is completed, a connection anchor of the UE is switched from the source base station to the target base station.

In another implementation, for UE in an inactive (INACTIVE) state, the UE may move in a radio access network-based notification area (RAN-based Notification Area, RNA) without notifying a RAN. The source base station reserves a context of the UE and an NG interface connection related to UE of the core network. When the UE needs to receive downlink data, the source base station may initiate paging in a cell in the RNA. After the UE receives a paging message, the UE switches from the inactive state to the connected state, and may receive the downlink data by using the target base station.

In another implementation, for UE that moves outside the RNA, an RNA update procedure is triggered. Specifically, after receiving an RNA update request of the UE, the target base station requests a previous serving base station, namely, the source base station, of the UE to restore the context of the UE, and notifies the core network to switch a path.

An application scenario of embodiments of this application is based on a scenario in which a task is executed between UE and a base station. For example, the UE requests a task base station to execute the task, and the task base station may return a task result to the UE; or a task base station requests the UE to execute the task, and the UE may return a task result to the task base station. The task base station and a connected base station that provides an access service for the UE are not the same base station, and task result interaction between the UE and the task base station requires forwarding by the connected base station. For example, the UE first sends the task result to the connected base station, and then the connected base station forwards the task result to the corresponding task base station. In a scenario in which the connected base station of the UE is switched, the connected base station of the UE may perform more than one switch, and the task base station usually remains unchanged. A current connected base station of the UE may be unable to obtain information about the task base station, and consequently, the task result cannot be transmitted. Therefore, how to implement communication between the task base station and the UE is an urgent problem to be resolved in this application.

In embodiments of this application, an apparatus configured to implement a wireless access function may be a network device, or may be an apparatus or a module, for example, a chip system, that can support the network device to implement the function. The apparatus may be installed in the network device.

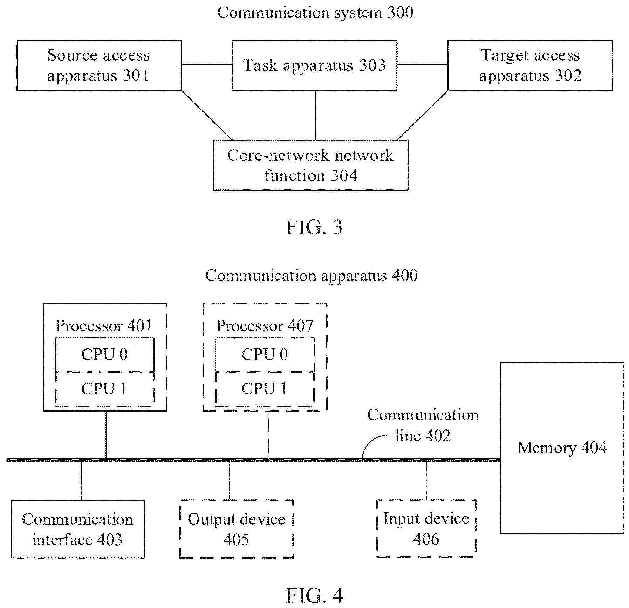

For example, embodiments of this application may be applied to a communication system shown in FIG. 3. The communication system 300 may include a source access apparatus 301, a target access apparatus 302, and a task apparatus 303. At least one of the foregoing apparatuses may be configured to provide a wireless access function and/or a task service function for a terminal.

Optionally, the communication system 300 may further include a core-network network function 304, for example, an access and mobility management function (Access and Mobility Function, AMF) in a 5G system, or connection function-control (Connection Function-Control, CF-C) in a 6G system.

Optionally, at least one of the foregoing apparatuses may be independently deployed, or may be a different module or a different apparatus deployed on a same device. An implementation of the communication system is not specifically limited in this application.

In the technical solutions provided in embodiments of this application, an example in which an apparatus configured to implement functions of a network device is a network device, and the network device is a base station is used to describe the technical solutions provided in embodiments of this application.

The technical solutions provided in embodiments of this application may be applied to wireless communication between a network device and a terminal device. In embodiments of this application, the term "wireless communication" may also be briefly referred to as "communication", and the term "communication" may also be described as "data transmission", "information transmission", or "transmission".

It should be noted that FIG. 1, FIG. 2, or FIG. 3 is merely an example framework diagram, and a quantity of network element nodes included in FIG. 1, FIG. 2, or FIG. 3 is not limited. In addition to function nodes shown in FIG. 1, FIG. 2, or FIG. 3, other nodes may be further included, for example, another core network device, a gateway device, or an application server. This is not limited. An access network device and a core network device communicate with each other through a wired network or a wireless network, for example, communicate with each other through an NG interface.

During specific implementation, network elements shown in FIG. 1, FIG. 2, or FIG. 3, for example, the terminal device and the network device, may use a composition structure shown in FIG. 4 or include components shown in FIG. 4. FIG. 4 is a diagram of a structure of a communication apparatus 400 according to an embodiment of this application. When the communication apparatus 400 has functions of the terminal device described in embodiments of this application, the communication apparatus 400 may be a terminal device, or a chip or a system-on-a-chip in a terminal device. When the communication apparatus 400 has functions of the network device in embodiments of this application, the communication apparatus 400 may be a network device, or a chip or a system-on-a-chip in a network device.

As shown in FIG. 4, the communication apparatus 400 may include a processor 401, a communication line 402, and a communication interface 403. Further, the communication apparatus 400 may include a memory 404. The processor 401, the memory 404, and the communication interface 403 may be connected to each other through the communication line 402.

The processor 401 may be a central processing unit (Central Processing Unit, CPU), a general-purpose processor, a network processor (Network Processor, NP), a digital signal processor (Digital Signal Processing, DSP), a microprocessor, a microcontroller, a programmable logic device, or any combination thereof. The processor 401 may alternatively be any other apparatus having a processing function, for example, a circuit, a device, or a software module.

The communication line 402 is configured to transmit information between components included in the communication apparatus 400.

The communication interface 403 is configured to communicate with another device or another communication network. The another communication network may be the Ethernet, a radio access network (Radio Access Network, RAN), a wireless local area network (Wireless Local Area Network, WLAN), or the like. The communication interface 403 may be an interface circuit, a pin, a radio frequency module, a transceiver, or any apparatus that can implement communication.

The memory 404 is configured to store instructions. The instructions may be a computer program.

The memory 404 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that the memory 404 may exist independently of the processor 401, or may be integrated into the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement the methods provided in the following embodiments of this application.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a keyboard, a mouse, a microphone, a joystick, or another device; and the output device 405 is a display, a speaker, or another device.

It should be noted that the communication apparatus 400 may be a wearable device, a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In this embodiment of this application, the chip system may include a chip, or may include a chip and another discrete device.

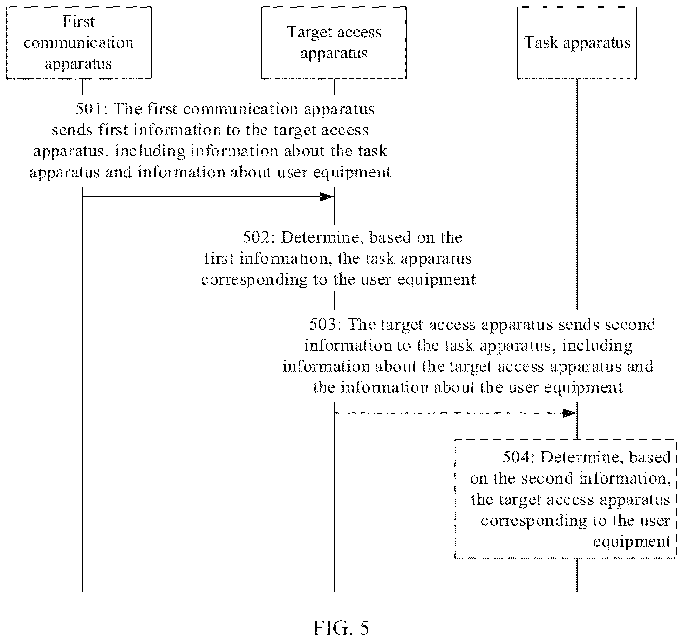

Based on the foregoing problem, an embodiment of this application provides a communication method. The method may be applied to a scenario in which a terminal needs to be handed over from a source access apparatus to a target access apparatus. As shown in FIG. 5, the method includes the following steps.

501: A first communication apparatus sends first information to the target access apparatus, including information about a task apparatus and information about the terminal.

The target access apparatus is a next access apparatus after triggering of cell handover by the terminal, that is, an access network device that subsequently provides an access service for the terminal after the terminal performs cell handover. In embodiments of this application, an access apparatus before cell handover performed by the terminal may be referred to as a source access apparatus.

The task apparatus may be a network node configured to implement a task scenario in a communication system, namely, a task anchor, and may be configured to request the terminal to execute a task (scenario 1), or may be configured to implement a task requested by the terminal (scenario 2).

In an implementation, the target access apparatus or the task apparatus may be specifically a gNB or an ng-eNB in a 5G system, or may be a cNode in a 6G system.

The information about the task apparatus is used to uniquely identify the task apparatus, and the information about the terminal is used to uniquely identify the terminal. The target access apparatus usually provides access for more than one terminal, and the task apparatus usually provides a task service for more than one terminal. Therefore, the information about the terminal may be associated with the information about the task apparatus, to determine a correspondence between the terminal and the task apparatus.

In an implementation, the information about the task apparatus may include an identifier ID of the task apparatus, or an Internet protocol (Internet Protocol, IP) address of the task apparatus. The information about the terminal may include a UE ID, for example, a temporary mobile subscription identifier (Temporary Mobile Subscription Identifier, TMSI) of UE.

The first communication apparatus that sends the first information may be the source access apparatus, or may be the terminal. In this case, the target access apparatus may obtain, based on the first information, the information about the task apparatus corresponding to the terminal, to implement subsequent task result data interaction between the UE and the task apparatus. The source access apparatus may be specifically a gNB or an ng-eNB in a 5G system, or may be a cNode in a 6G system.

In an implementation, the first information may be separately sent. Alternatively, the first information may be carried in some messages in an existing interaction procedure. For example, the first information may be carried in a handover request message, or carried in a context message of the terminal, or carried in an RRC resume request message, so that signaling overheads can be reduced.

502: The target access apparatus determines, based on the first information, the task apparatus corresponding to the terminal.

Correspondingly, the target access apparatus receives the first information, obtains the information about the task apparatus and the information about the terminal that are included in the first information, determines the task apparatus corresponding to the terminal, and stores the information about the task apparatus and the information about the terminal.

Based on the task service scenario 1, that is, the scenario in which the task apparatus requests the terminal to execute the task, when the terminal generates a task result after completing execution, the task result needs to be forwarded by the target access apparatus currently connected to the terminal, to be sent to the task apparatus. Therefore, in the foregoing implementation of this application, the target access apparatus already stores the correspondence between the terminal and the task apparatus. When receiving the task result from the terminal, the target access apparatus may forward the task result to the corresponding task apparatus by querying the correspondence.

In an implementation, based on the scenario 1, the method may further include the following steps: After task execution ends, the terminal sends the task result to the target access apparatus. Then, the target access apparatus sends the task result to the task apparatus based on the information about the task apparatus corresponding to the terminal.

In addition, in consideration of the task service scenario 2, that is, the scenario in which the terminal requests the task apparatus to execute the task, after task execution ends, the task apparatus needs to feed back a task result to the terminal. Therefore, the task apparatus needs to obtain information about the target access apparatus currently connected to the terminal. After receiving a task request, the task apparatus may execute the task, or may allocate the task to one or more executors (for example, network nodes) for execution. After task execution ends, the task apparatus collects task results of the executors, and sends the task results to the terminal.

To resolve a problem that the task apparatus cannot determine a connected base station (for example, the target access apparatus) corresponding to the terminal in the scenario 2, this embodiment of this application further provides a communication method. As shown in FIG. 5, in a possible implementation, the method may further include the following steps.

503: The target access apparatus sends second information to the task apparatus, including information about the target access apparatus and the information about the terminal.

Specifically, the target access apparatus may send, based on the first information, the second information to the task apparatus indicated by the first information, to indicate the information about the target access apparatus currently accessed by the terminal, so that the task apparatus may store the task apparatus corresponding to the terminal.

504: The task apparatus determines, based on the second information, the target access apparatus corresponding to the terminal.

Specifically, the task apparatus receives the second information, and obtains and stores the information about the target access apparatus and the information about the terminal that are included in the second information.

Therefore, in the foregoing implementation of this application, after completing task execution, the task apparatus obtains the task result, and may query, based on a stored correspondence between the terminal and the target access apparatus, the information about the target access apparatus corresponding to the terminal, to send the task result to the target access apparatus. Then, the target access apparatus may forward the task result to the terminal, to successfully implement information interaction between the terminal and the task apparatus.

In an implementation, the method may further include the following steps: After task execution ends, the task apparatus needs to send the task result to the terminal. The task apparatus may send the corresponding task result to the target access apparatus based on the stored information about the terminal and the target access apparatus. Then, the target access apparatus sends the task result to the terminal based on the information corresponding to the terminal.

It should be noted that, specific processing procedures in the implementation solutions of this application may be different in different task service scenarios, different procedures currently triggered when the terminal moves, or different communication system architectures (for example, a 5G or 6G system). For example, when the terminal moves in a connected state, a cell handover procedure is triggered; when the terminal moves in an inactive state, a procedure of switching to a connected state is triggered; or when the terminal moves, an RNA update procedure is triggered. The following describes specific implementations of embodiments of this application with reference to specific implementation scenarios.

Embodiment 1: based on a task scenario 1 in which a task apparatus requests a terminal to execute a task.

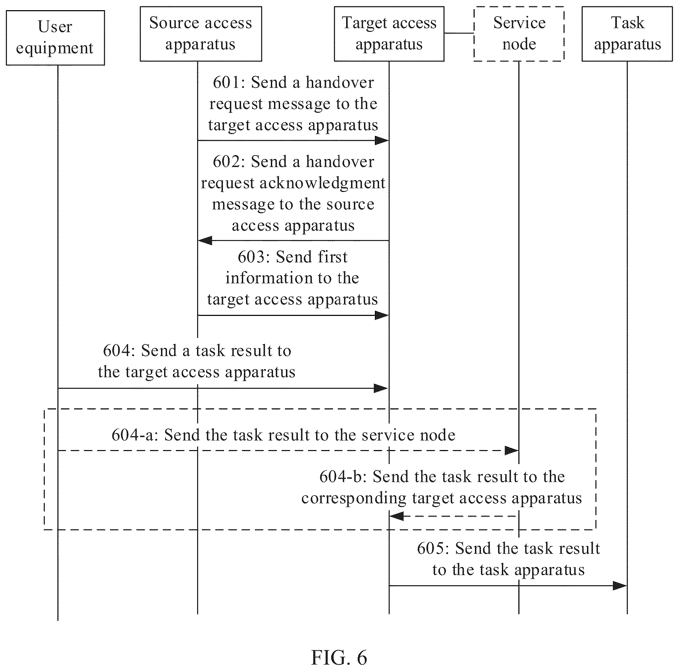

Example 1: As shown in FIG. 6, a cell handover procedure triggered by UE in a connected state may include the following steps.

601: A source access apparatus sends a handover request message to a target access apparatus.

The handover request message is used to make a request to the target access apparatus to indicate that an access apparatus of a terminal needs to be switched from the source access apparatus to the target access apparatus. For example, the handover request message is a HandoverRequest message.

602: The target access apparatus sends a handover request acknowledgment message to the source access apparatus.

The handover request acknowledgment message indicates to receive a handover request. For example, the handover request acknowledgment message is a HandoverRequestAck message.

603: The source access apparatus sends first information to the target access apparatus.

The source access apparatus may send the first information to the target access apparatus, to indicate information about the task apparatus and information about the terminal.

In an implementation, the first information may be carried in the handover request message in step 601. In other words, steps 601 and 603 may be combined. For example, the handover request message carries an identifier of the task apparatus and an identifier of the terminal. In this way, signaling interaction overheads can be reduced.

604: The terminal sends a task result to the target access apparatus.

605: The target access apparatus sends the task result to the task apparatus.

The target access apparatus may determine, based on the information about the task apparatus and the information about the terminal that are stored in step 603, the information about the task apparatus corresponding to the terminal, and send the task result to the task apparatus.

The foregoing implementation may be applied to a 5G system. For a 6G system, base stations are classified into cluster nodes cNodes and service nodes sNodes. The target access apparatus may be a cNode, and is configured to perform connection-related signaling interaction and task-related signaling interaction. The sNode is a service node that provides data functions of task scheduling, execution, and connection, and is configured to provide functions such as data forwarding. Therefore, for step 604 in the foregoing implementation procedure, the sNode may perform data forwarding for the task result. In other words, the terminal first sends the task result to the cNode through the sNode. Then, the cNode queries and obtains the information about the task apparatus corresponding to the terminal, and then sends the task result to the task apparatus.

In an implementation, step 604 may specifically include:
604-a: The terminal sends the task result to the service node.
604-b: The service node sends the task result to the corresponding target access apparatus.

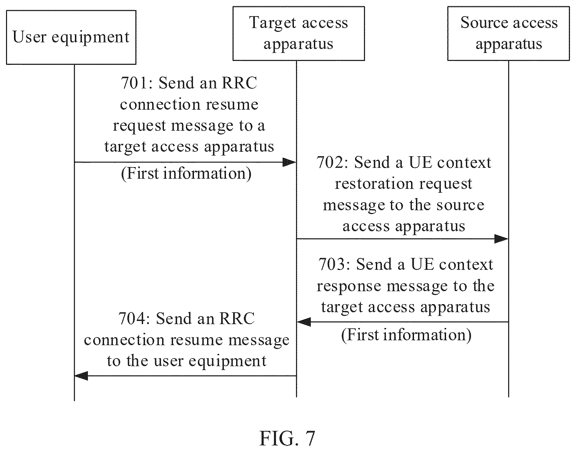

Example 2: As shown in FIG. 7, a procedure in which the terminal switches from an inactive state to a connected state may include the following steps.

701: The terminal sends an RRC connection resume request message to a target access apparatus.

For example, the RRC connection resume request message may be an RRCResumeRequest message.

In an implementation, the RRC connection resume request message may include first information, that is, information about the task apparatus and information about the terminal. In this case, the target access apparatus may store a correspondence between the terminal and the task apparatus for subsequent transmission of a task result.

702: The target access apparatus sends a UE context restoration request message to a source access apparatus.

703: The source access apparatus sends a UE context response message to the target access apparatus.

In other words, the source access apparatus sends a context of UE to the target access apparatus.

In an implementation (for example, the RRC connection resume request message does not carry the first information), the context of the UE may include the first information, that is, include the information about the task apparatus and the information about the terminal. In this case, the target access apparatus may store the correspondence between the terminal and the task apparatus for subsequent transmission of the task result.

704: The target access apparatus sends an RRC connection resume message to the terminal.

For example, the RRC connection resume message may be an RRCResume message.

Then, the terminal may switch from the inactive state to the connected state, so that the terminal can send uplink data, or can receive downlink data, or the terminal triggers RNA update. For example, after task execution ends, the terminal sends the task result to the target access apparatus. Then, the target access apparatus sends the task result to the task apparatus based on the information about the task apparatus corresponding to the terminal.

Embodiment 2: based on a task scenario 2 in which a terminal requests a task apparatus to execute a task.

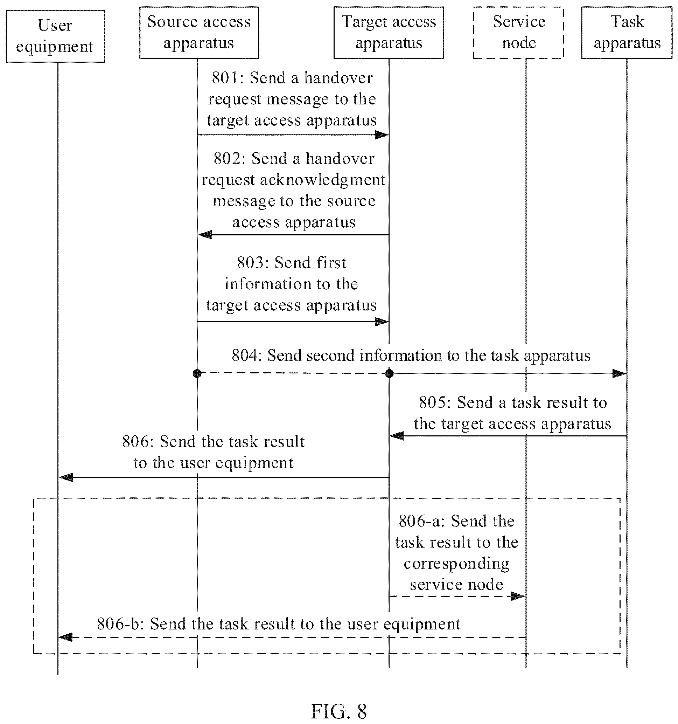

Example 3: As shown in FIG. 8, a cell handover procedure triggered by UE in a connected state may include the following steps.

801: A source access apparatus sends a handover request message to a target access apparatus.

802: The target access apparatus sends a handover request acknowledgment message to the source access apparatus.

803: The source access apparatus sends first information to the target access apparatus.

The first information indicates information about the task apparatus and information about the terminal.

In an implementation, the first information may be carried in the handover request message in step 801. In other words, steps 801 and 803 may be combined. For example, the handover request message carries an identifier of the task apparatus and an identifier of the terminal. In this way, signaling interaction overheads can be reduced.

804: The target access apparatus or the source access apparatus sends second information to the task apparatus.

The second information indicates information about the target access apparatus and the information about the terminal.

805: The task apparatus sends a task result to the target access apparatus.

806: The target access apparatus sends the task result to the terminal.

The foregoing implementation may be applied to a 5G system. In addition, for a 6G system, base stations are classified into cluster nodes cNodes and service nodes sNodes. The target access apparatus may be a cNode, and a corresponding service node sNode is configured to: provide data functions of task scheduling, execution, and connection, and provide a function such as data forwarding. Therefore, for step 806 in the foregoing implementation procedure, the sNode may execute data forwarding for the task result.

In an implementation, step 806 may specifically include:

806-a: The target access apparatus sends the task result to the corresponding service node.

806-b: The service node sends the task result to the terminal.

According to the method provided in this embodiment of this application, a connection anchor, namely, the target access apparatus currently accessed by the terminal, may obtain, by using the first information, information about a task anchor corresponding to the terminal, and the task anchor may obtain, by using the second information, information about the connection anchor corresponding to the terminal. In this way, when the task anchor and the connection anchor are separately deployed, the task result may be transmitted between the task anchor and the connection anchor, to improve communication efficiency in a task scenario.

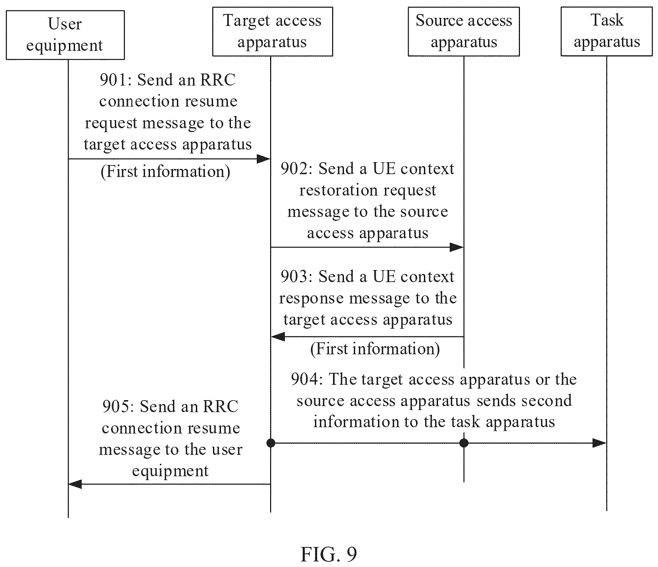

Example 4: As shown in FIG. 9, a procedure in which the terminal switches from an inactive state to a connected state may include the following steps.

901: The terminal sends an RRC connection resume request message to a target access apparatus.

For example, the RRC connection resume request message may be an RRCResumeRequest message.

In an implementation, the RRC connection resume request message may include first information, that is, information about the task apparatus and information about the terminal. In this case, the target access apparatus may store a correspondence between the terminal and the task apparatus for subsequent transmission of a task result.

902. The target access apparatus sends a UE context restoration request message to a source access apparatus.

903: The source access apparatus sends a UE context response message to the target access apparatus.

In other words, the source access apparatus sends a context of UE to the target access apparatus.

In an implementation (for example, the RRC connection resume request message does not carry the first information), the context of the UE may include the first information, that is, include the information about the task apparatus and the information about the terminal. In this case, the target access apparatus may store the correspondence between the terminal and the task apparatus for subsequent transmission of the task result.

904: The target access apparatus or the source access apparatus sends second information to the task apparatus.

The second information includes information about the target access apparatus and the information about the terminal. In this case, the task apparatus may store a correspondence between the terminal and the target access apparatus for subsequent transmission of the task result.

905: The target access apparatus sends an RRC connection resume message to the terminal.

Then, the terminal may switch from the inactive state to the connected state, so that the terminal can send uplink data, or can receive downlink data, or the terminal triggers RNA update. For example, after task execution ends, the task apparatus sends the task result to the target access apparatus. Then, the target access apparatus sends the task result to the terminal based on information about the correspondence between the task apparatus and the terminal.

In a possible implementation, the first information may be further sent by the terminal to the target access apparatus. That is, the terminal sends the information about the task apparatus to the target access apparatus. The following describes a specific implementation process of this implementation.

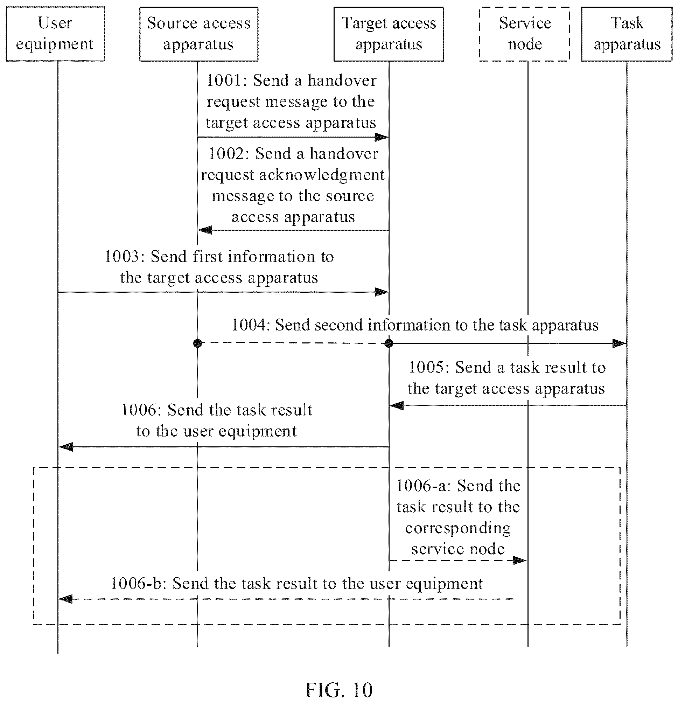

Example 5: As shown in FIG. 10, a cell handover procedure triggered by UE in a connected state may include the following steps.

1001: A source access apparatus sends a handover request message to a target access apparatus.

1002: The target access apparatus sends a handover request acknowledgment message to the source access apparatus.

1003: A terminal sends first information to the target access apparatus.

The first information indicates information about a task apparatus and information about the terminal.

1004: The target access apparatus or the source access apparatus sends second information to the task apparatus.

The target access apparatus determines, based on the first information, the information about the task apparatus corresponding to the terminal, to send the second information to the task apparatus based on the first information. Alternatively, the source access apparatus sends the second information to the task apparatus based on the stored information about the task apparatus, to indicate information about the target access apparatus and the information about the terminal, so that the task apparatus may store a correspondence between the terminal and the target access apparatus for subsequent transmission of a task result.

1005: The task apparatus sends the task result to the target access apparatus.

1006: The target access apparatus sends the task result to the terminal.

In an implementation, similar to the foregoing embodiment, for a 6G system, in step 1006 in the foregoing implementation procedure, an sNode may perform data forwarding for the task result. Step 1006 may specifically include:
1006-a: The target access apparatus sends the task result to a corresponding service node.
1006-b: The service node sends the task result to the terminal.

In an implementation, when the UE is in an inactive state, after completing task execution and collecting the task result, the task apparatus needs to send the task result to the terminal. In this case, the task apparatus may first query information about a previous serving base station, namely, the source access apparatus, of the terminal. The task apparatus first routes the task result to the source access apparatus. Then, the source access apparatus initiates paging. After receiving a paging message, the terminal switches to the connected state to receive the task result.

In addition, because a core network stores an access relationship between the terminal and an access network device, the task apparatus may further request a core network device to obtain information about a current access apparatus of a terminal.

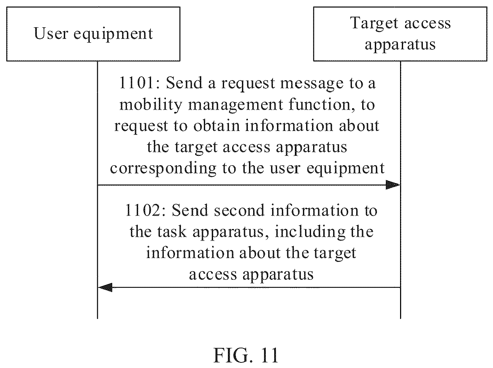

In an implementation, this application further provides a communication manner. As shown in FIG. 11, the method may include the following steps.

1101: A task apparatus sends a request message to a mobility management function, to request to obtain information about a target access apparatus corresponding to a terminal.

The request message may include information about the terminal, and the request message indicates to obtain the information about the target access apparatus corresponding to the terminal.

In an implementation, the mobility management function may be an AMF in a 5G system, or another core network function, or may be CF-C in a 6G system, or the like. This is not specifically limited in this application.

1102: The mobility management function sends second information to the task apparatus, including the information about the target access apparatus.

Correspondingly, after receiving the request message, the mobility management function may perform query based on the information about the terminal, and obtain information about a current access apparatus corresponding to the terminal, that is, the information about the target access apparatus.

Then, the mobility management function generates the second information, including the information about the target access apparatus and the information about the terminal, and sends the second information to the task apparatus.

Correspondingly, the task apparatus receives the second information from the mobility management function, to obtain the information about the target access apparatus currently accessed by the terminal, so that transmission of a subsequent task result is implemented.

The following describes specific implementations of FIG. 11 in the foregoing embodiment of this application with reference to specific implementation scenarios.

Embodiment 3: based on a task scenario 1 in which a task apparatus requests a terminal to execute a task.

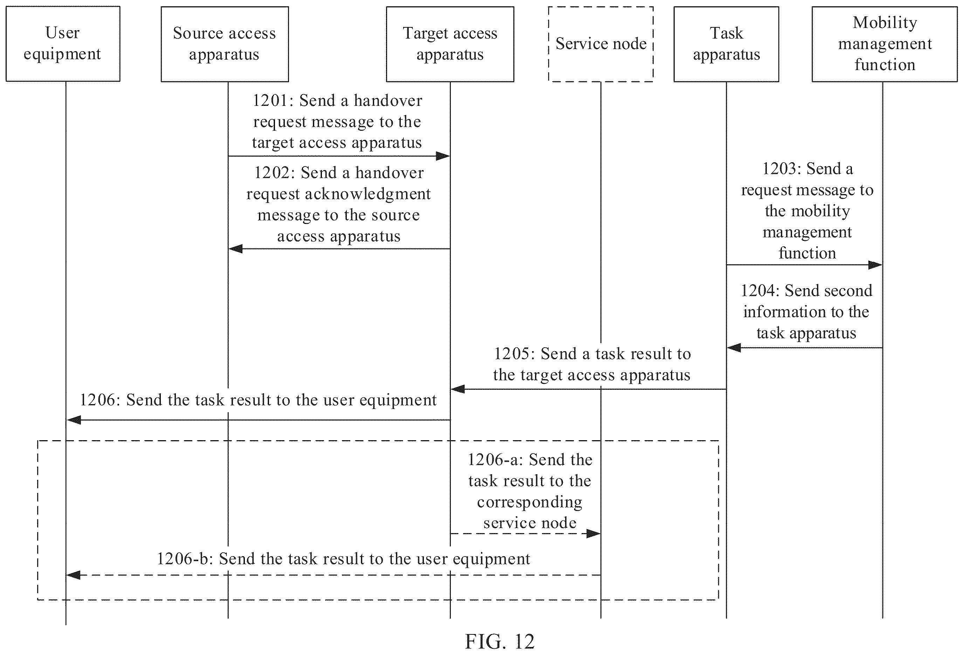

Example 6: As shown in FIG. 12, a cell handover procedure triggered by UE in a connected state may include the following steps.

1201: A source access apparatus sends a handover request message to a target access apparatus.

1202: The target access apparatus sends a handover request acknowledgment message to the source access apparatus.

1203: A task apparatus sends a request message to a mobility management function.

1204: The mobility management function sends second information to the task apparatus, including information about the target access apparatus.

1205: The task apparatus sends a task result to the target access apparatus.

The task apparatus may send, to the target access apparatus based on the information about the target access apparatus and information about a terminal that are indicated by the second information, the task result corresponding to the terminal.

1206: The target access apparatus sends the task result to the terminal.

In an implementation, based on a 6G system, for step 1206 in the foregoing implementation procedure, an sNode may perform data forwarding for the task result.

Step 1206 may specifically include:
1206-a: The target access apparatus sends the task result to a corresponding service node.
1206-b: The service node sends the task result to the task apparatus.

In an implementation, if the UE is in an inactive state, when needing to send the task result to the terminal after task execution ends, the task apparatus may first query, from a core network, information about a previous serving base station, namely, a source access device, corresponding to the terminal, and first route the task result to the source access device. Then, the source access device may initiate paging. After receiving a paging message, the terminal switches to the connected state to receive the task result.

In addition, for the task service scenario 1, that is, the scenario in which the task apparatus requests the terminal to execute the task, when the terminal generates the task result after completing execution, the task result needs to be forwarded by the target access apparatus currently connected to the terminal, to be sent to the task apparatus Therefore, the target access apparatus needs to obtain information about a task anchor, namely, the task apparatus, corresponding to the terminal.

To resolve a problem that the target access apparatus cannot locate the task apparatus in the scenario 1, an embodiment of this application further provides a communication method. A task result generated by a terminal carries first information, that is, information about the terminal and information about a corresponding task apparatus, so that a target access apparatus can obtain the first information from the task result, determine the information about the task apparatus corresponding to the terminal, and forward the task result to the correct task apparatus.

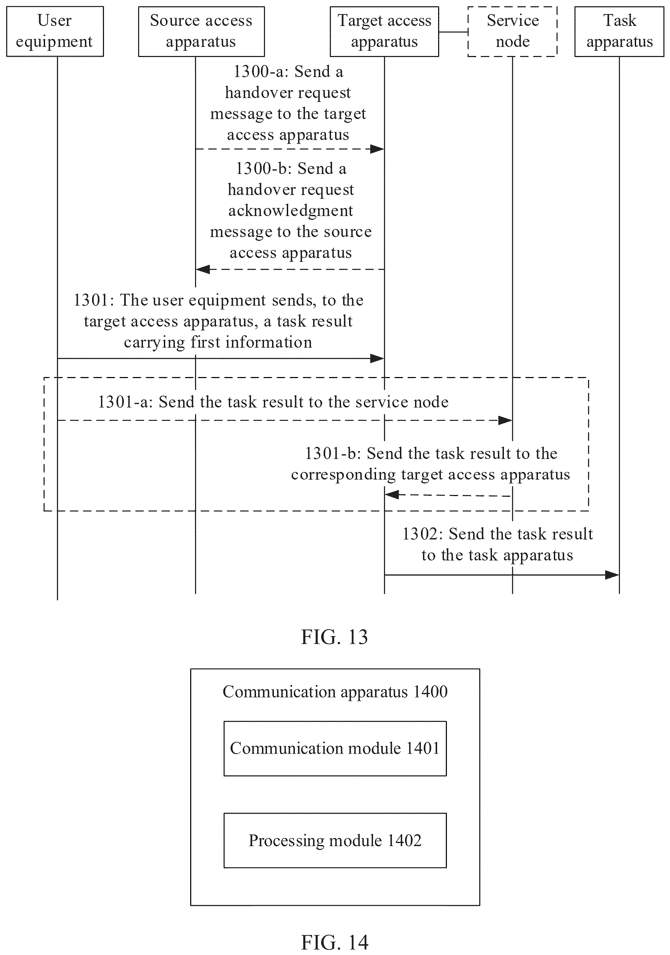

In a possible implementation, as shown in FIG. 13, the method may further include the following steps.

1301: The terminal sends, to the target access apparatus, the task result carrying the first information.

The first information indicates information about the task apparatus and information about the terminal. For example, the terminal may encapsulate the first information in a header of a data packet of the task result.

1302: The target access apparatus sends the task result to the task apparatus.

Correspondingly, the target access apparatus receives the task result, and then may parse out the carried first information to obtain the information about the task apparatus corresponding to the terminal, so that the task result can be forwarded to the task apparatus.

In an implementation, a cell handover procedure is triggered for UE in a connected state. Therefore, before step 1301, this implementation may further include the following steps.

1300-a: A source access apparatus sends a handover request message to the target access apparatus.

1300-b: The target access apparatus sends a handover request acknowledgment message to the source access apparatus.

In a possible implementation, for a 6G system, in step 1301 in the foregoing implementation procedure, an sNode may perform data forwarding for the task result. In other words, the terminal first sends the task result to a cNode through the sNode. Then, the cNode queries and obtains the information about the task apparatus corresponding to the terminal, and then sends the task result to the task apparatus.

Optionally, step 1301 may specifically include:
1301-a: The terminal sends the task result to the service node.
1301-b: The service node sends the task result to the corresponding target access apparatus.

In the foregoing implementation of this application, through the terminal, after receiving the task result, the currently accessed target access apparatus may parse the information that is about the task apparatus and that is carried in the task result, to forward the task result to the corresponding task apparatus, so that data interaction between the terminal and the task apparatus can be implemented in a scenario in which a task anchor and a connection anchor are separately deployed, to improve communication efficiency. In addition, no additional signaling needs to be added for the terminal, and air interface signaling overheads on a terminal side can be effectively reduced.

Based on the foregoing implementations, an embodiment of this application further provides a communication apparatus configured to implement the method implemented by the target access apparatus in the foregoing embodiments. As shown in the FIG. 14, the communication apparatus 1400 may include a communication module 1401 and a processing module 1402.

The communication module 1401 is configured to receive first information, where the first information includes information about a task apparatus and information about a terminal.

The processing module 1402 is configured to determine, based on the first information, the task apparatus corresponding to the terminal.

In an implementation, the communication module 1401 is further configured to send second information to the task apparatus based on the first information, where the second information includes information about the communication apparatus 1400 and the information about the terminal.

In an implementation, the first information is from a source access apparatus of the terminal.

In an implementation, the first information is carried in a handover request message, or carried in a context message of the terminal.

In an implementation, the first information is from the terminal.

In an implementation, the first information is carried in a radio resource control RRC resume request message.

In an implementation, the communication module 1401 is further configured to receive a task result from the task apparatus, and send the task result to the terminal.

In an implementation, the communication module 1401 is further configured to receive a task result from the terminal, and send the task result to the task apparatus.

In an implementation, the information about the task apparatus includes identification information of the task apparatus or an Internet protocol IP address of the task apparatus.

In an implementation, the source access apparatus or the communication apparatus 1400 includes a cluster node configured to implement a device access function, and the task apparatus includes a cluster node configured to implement a task function.

Specifically, the communication apparatus 1400 may implement functions of the target access apparatus in the foregoing possible implementations. For details, refer to detailed descriptions in the foregoing method examples. Details are not described herein again.

In addition, this application further provides a communication apparatus configured to implement the method implemented by the first communication apparatus in the foregoing embodiments. As shown in FIG. 14, the communication apparatus 1400 includes a processing module 1402 and a communication module 1401.

The processing module 1402 is configured to determine first information, where the first information includes information about a task apparatus and information about a terminal.

The communication module 1401 is configured to send the first information to a target access apparatus corresponding to the terminal.

In an implementation, the communication apparatus 1400 is the terminal, or a source access apparatus corresponding to the terminal.

In an implementation, the first information is carried in a handover request message, or carried in a context message of the terminal, or carried in a radio resource control RRC resume request message, or carried in a task result generated by the terminal.

In an implementation, if the communication apparatus 1400 is the source access apparatus, the communication module 1401 is further configured to send second information to the task apparatus, where the second information includes information about the target access apparatus and the information about the terminal.

In an implementation, the information about the apparatus includes identification information of the apparatus or an Internet protocol IP address of the apparatus.

In an implementation, the source access apparatus or the target access apparatus includes a cluster node configured to implement a device access function, and the task apparatus includes a cluster node configured to implement a task function.

Specifically, the communication apparatus 1400 may implement functions of the first communication apparatus in the implementations shown in FIG. 5. For details, refer to the detailed descriptions in the foregoing method examples. Details are not described herein again.

In addition, this application further provides a communication apparatus configured to implement the method performed by the task apparatus in the foregoing implementations. As shown in FIG. 14, the communication apparatus 1400 may include a processing module 1402 and a communication module 1401.

The communication module 1401 is configured to receive second information.

The processing module 1402 is configured to obtain information about a target access apparatus and information about a terminal that are included in the second information.

In an implementation, the communication module 1401 is specifically configured to receive the second information from the target access apparatus, or receive the second information from a source access apparatus.

In an implementation, the communication module 1401 is configured to: send a request message to a mobility management function, where the request message includes the information about the terminal and indicates to obtain the information about the target access apparatus corresponding to the terminal; and receive the second information from the mobility management function.

In an implementation, the information about the target access apparatus includes identification information of the target access apparatus or an Internet protocol IP address of the target access apparatus.

In an implementation, the source access apparatus or the target access apparatus includes a cluster node configured to implement a device access function, and the task apparatus includes a cluster node configured to implement a task function.

In an implementation, the communication module 1401 is further configured to: obtain a task result corresponding to the terminal; and send the task result to the terminal.

Specifically, the communication apparatus 1400 may implement functions of the task apparatus in the foregoing possible implementations. For details, refer to detailed descriptions in the foregoing method examples. Details are not described herein again.

In addition, this application further provides a communication apparatus configured to implement the method performed by the mobility management function in the foregoing implementations. As shown in FIG. 14, the communication apparatus 1400 may include a communication module 1401.

The communication module 1401 is configured to receive a request message from a task apparatus, where the request message includes information about a terminal and indicates to obtain information about a target access apparatus corresponding to the terminal. The communication module 1401 is further configured to send, to the task apparatus, the information about the target access apparatus corresponding to the terminal.

In an implementation, the information about the target access apparatus includes identification information of the target access apparatus or an Internet protocol IP address of the target access apparatus.

Specifically, the communication apparatus 1400 may implement functions of the mobility management function in the foregoing possible implementations. For details, refer to detailed descriptions in the foregoing method examples. Details are not described herein again.

In addition, this application further provides a communication apparatus configured to implement the method performed by the terminal in the foregoing implementations. As shown in FIG. 14, the communication apparatus 1400 may include a communication module 1401.

A processing module 1402 is configured to obtain a task result corresponding to a task apparatus.

The communication module 1401 is configured to send the task result to a target access apparatus, where the task result includes information about the task apparatus and information about the communication apparatus.

In an implementation, the task result further includes identification information of a task.

In an implementation, the information about the task apparatus includes identification information of the task apparatus or an Internet protocol IP address of the task apparatus.

Specifically, the communication apparatus 1400 may implement functions implemented by the terminal in the foregoing possible implementations. For details, refer to detailed descriptions in the foregoing method examples. Details are not described herein again.

It may be understood that with reference to FIG. 4, when the apparatus is an electronic device, the foregoing transmission module may be a transceiver, and may include an antenna, a radio frequency circuit, and the like, and the processing module may be a processor, for example, a baseband chip. When the apparatus is a component having a function of the first communication device and/or the second communication device in the foregoing embodiments, the transmission module may be a radio frequency unit, and the processing module may be a processor. When the apparatus is a chip system, the transmission module may be an input interface and/or an output interface of the chip system, and the processing module may be a processor of the chip system, for example, a central processing unit (central processing unit, CPU).

It should be noted that, for a specific execution process and an embodiment of the foregoing apparatus, refer to the steps performed by the terminal device or the network device and the related descriptions in the foregoing method embodiments. For a resolved technical problem and a technical effect brought by resolving the technical problem, refer to the content described in the foregoing embodiments. Details are not described one by one herein again.

In this embodiment, the sidelink transmission apparatus is presented in a form of functional module obtained through division in an integrated manner. The "module" herein may be a specific circuit, a processor for executing one or more software or firmware programs, a memory, an integrated logic circuit, and/or another device that may provide the foregoing functions. In a simple embodiment, a person skilled in the art may figure out that the sidelink transmission apparatus may be in a form shown in FIG. 4.

For example, a function/implementation process of the processing module 1402 in FIG. 14 may be implemented by the processor 401 in FIG. 4 by invoking computer program instructions stored in the memory 404. For example, a function/implementation process of the communication module 1401 in FIG. 14 may be implemented through the communication interface 403 in FIG. 4.

In some implementations, the processor 401 in FIG. 4 may invoke computer-executable instructions stored in the memory 404, so that the apparatus 400 can perform operations implemented by the apparatuses in the foregoing method embodiments, to implement the foregoing possible implementation methods of this application.

The communication apparatuses in the foregoing apparatus embodiments may completely correspond to the execution apparatuses in the method embodiments, and a corresponding module or unit performs a corresponding step. For example, when the apparatus is implemented in a form of chip, the communication module may be an interface circuit that is of the chip and that is configured to receive a signal from another chip or apparatus. The foregoing transceiver unit for sending or receiving is an interface circuit of the apparatus, and is configured to send a signal to another apparatus. For example, when the apparatus is implemented in a form of chip, the communication module may be an interface circuit configured to send a signal to another chip or apparatus.

In an example embodiment, a computer-readable storage medium including instructions or a computer program product is further provided. The instructions may be executed by the processor 401 of the communication apparatus 400 to complete the method in the foregoing embodiments. Therefore, for technical effects that can be achieved by the computer-readable storage medium or the computer program product, refer to the foregoing method embodiments. Details are not described herein again.

This application further provides a computer program product. The computer program product includes instructions. When the instructions are executed, a computer is enabled to separately perform operations, performed by each apparatus, corresponding to the foregoing methods.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a communication apparatus in which the chip is used performs the methods provided in embodiments of this application.

Optionally, any communication apparatus provided in embodiments of this application may include the system chip.

Optionally, the computer instructions are stored in a storage unit.

In addition, an embodiment of this application further provides a communication system. With reference to FIG. 3, the communication system 300 may include a source access apparatus 301, a target access apparatus 302, and a task apparatus 303.

The source access apparatus 301 or a terminal is configured to send first information to the target access apparatus 302, where the first information includes information about the task apparatus 303 and information about the terminal, and the terminal is handed over from the source access apparatus 301 to the target access apparatus 302.

The target access apparatus 302 is configured to determine, based on the first information, the task apparatus 303 corresponding to the terminal.

In an implementation, the target access apparatus 302 is further configured to send second information to the task apparatus 303 based on the first information, where the second information includes information about the target access apparatus 302 and the information about the terminal.

In an implementation, if the source access apparatus 301 sends the first information, the first information is carried in a handover request message, or carried in a context message of the terminal.

In an implementation, the communication system 300 further includes the terminal. If the terminal sends the first information, the first information is carried in a radio resource control RRC resume request message.

In an implementation, the task apparatus 303 is further configured to send, to the target access apparatus 302, a task result corresponding to the terminal, and the target access apparatus 302 is further configured to send the task result to the terminal.

In an implementation, the communication system 300 further includes the terminal. The terminal is configured to: obtain a task result corresponding to the task apparatus, and send the task result to the target access apparatus. The target access apparatus sends the task result to the task apparatus.

In an implementation, the communication system 300 further includes a mobility management function, for example, the core-network network function 304 in FIG. 3. The mobility management function may be used to receive a request message sent by the task apparatus 303, where the request message includes the information about the terminal and indicates to obtain the information about the target access apparatus corresponding to the terminal. The mobility management function is used to send, to the task apparatus, the information about the target access apparatus 302 corresponding to the terminal.

In an implementation, the information about the apparatus includes identification information of the apparatus or an Internet protocol IP address of the apparatus.

It should be noted that the communication system in this embodiment of this application may be a device-level communication system. To be specific, the communication system includes a plurality of devices configured to implement the methods in the foregoing embodiments of this application. Alternatively, the communication system may be a module-level communication system. To be specific, at least one communication apparatus included in the communication system may be integrated into one physical device. For example, the source access apparatus and the task apparatus in the foregoing implementations of this application are integrated into one device, or the source access apparatus, the target access apparatus, and the task apparatus are all integrated into one device. A specific implementation of the communication system is not limited in this application.

All or some of the foregoing embodiments may be implemented by using software, hardware, firmware, or any combination thereof. When a software program is used to implement embodiments, embodiments may be implemented completely or partially in a form of computer program product. The computer program product includes one or more computer instructions. When computer program instructions are loaded and executed on a computer, all or some of the procedures or functions according to embodiments of this application are generated. The computer may be a general-purpose computer, a dedicated computer, a computer network, or another programmable apparatus.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

It may be understood that a same step or steps or messages with a same function in embodiments of this application may be referenced in different embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a target access apparatus, wherein the method comprises:
receiving first information, wherein the first information comprises information about a task apparatus and information about a terminal; and
determining, based on the first information, the task apparatus corresponding to the terminal.

2. The method according to claim 1, wherein the method further comprises:
sending second information to the task apparatus based on the first information, wherein the second information comprises information about the target access apparatus and the information about the terminal.

3. The method according to claim 1 or 2, wherein the first information is from a source access apparatus of the terminal.

4. The method according to any one of claims 1 to 3, wherein the first information is carried in a handover request message, or carried in a context message of the terminal.

5. The method according to claim 1 or 2, wherein the first information is from the terminal.

6. The method according to claim 5, wherein the first information is carried in a radio resource control RRC resume request message.

7. The method according to any one of claims 1 to 6, wherein the method further comprises:
receiving a task result from the task apparatus; and
sending the task result to the terminal.

8. The method according to any one of claims 1 to 6, wherein the method further comprises:
receiving a task result from the terminal; and
sending the task result to the task apparatus.

9. The method according to any one of claims 1 to 8, wherein the information about the task apparatus comprises identification information of the task apparatus or an Internet protocol IP address of the task apparatus.

10. The method according to any one of claims 1 to 9, wherein the source access apparatus or the target access apparatus comprises a cluster node configured to implement a device access function, and the task apparatus comprises a cluster node configured to implement a task function.

11. A communication method, wherein the method comprises:
determining, by a first communication apparatus, first information, wherein the first information comprises information about a task apparatus and information about a terminal; and
sending the first information to a target access apparatus corresponding to the terminal.

12. The method according to claim 11, wherein the first communication apparatus is the terminal or a source access apparatus corresponding to the terminal.

13. The method according to claim 11 or 12, wherein the first information is carried in a handover request message, or carried in a context message of the terminal, or carried in a radio resource control RRC resume request message, or carried in a task result generated by the terminal.

14. The method according to any one of claims 11 to 13, wherein if the first communication apparatus is the source access apparatus, the method further comprises:
sending, by the source access apparatus, second information to the task apparatus, wherein the second information comprises information about the target access apparatus and the information about the terminal.

15. The method according to any one of claims 11 to 14, wherein the information about the apparatus comprises identification information of the apparatus or an Internet protocol IP address of the apparatus.

16. The method according to any one of claims 11 to 15, wherein the source access apparatus or the target access apparatus comprises a cluster node configured to implement a device access function, and the task apparatus comprises a cluster node configured to implement a task function.

17. A communication method, applied to a task apparatus, wherein the method comprises:
receiving second information; and
obtaining information about a target access apparatus and information about a terminal that are comprised in the second information.

18. The method according to claim 17, wherein receiving the second information specifically comprises:
receiving the second information from the target access apparatus; or
receiving the second information from a source access apparatus.

19. The method according to claim 17, wherein the method further comprises:
sending a request message to a mobility management function, wherein the request message comprises the information about the terminal and indicates to obtain the information about the target access apparatus corresponding to the terminal; and
receiving the second information specifically comprises:
receiving the second information from the mobility management function.

20. The method according to any one of claims 17 to 19, wherein the information about the target access apparatus comprises identification information of the target access apparatus or an Internet protocol IP address of the target access apparatus.

21. The method according to any one of claims 17 to 20, wherein the source access apparatus or the target access apparatus comprises a cluster node configured to implement a device access function, and the task apparatus comprises a cluster node configured to implement a task function.

22. The method according to any one of claims 17 to 21, wherein the method further comprises:
obtaining a task result corresponding to the terminal; and
sending the task result to the terminal.

23. A communication method, applied to a terminal, wherein the terminal is configured to implement a task requested by a task apparatus, the terminal is handed over from a source access apparatus to a target access apparatus, and the method comprises:
obtaining a task result corresponding to the task apparatus; and
sending the task result to the target access apparatus, wherein the task result comprises information about the task apparatus and information about the terminal.

24. The method according to claim 23, wherein the task result further comprises identification information of the task.

25. The method according to claim 23 or 24, wherein the information about the task apparatus comprises identification information of the task apparatus or an Internet protocol IP address of the task apparatus.

26. A communication system, wherein the communication system comprises a source access apparatus, a target access apparatus, and a task apparatus;
the source access apparatus or a terminal is configured to send first information to the target access apparatus, wherein the first information comprises information about the task apparatus and information about the terminal, and the terminal is handed over from the source access apparatus to the target access apparatus; and
the target access apparatus is configured to determine, based on the first information, the task apparatus corresponding to the terminal.

27. The communication system according to claim 26, wherein the target access apparatus is further configured to send second information to the task apparatus based on the first information, and the second information comprises information about the target access apparatus and the information about the terminal.

28. The communication system according to claim 26 or 27, wherein if the source access apparatus sends the first information, the first information is carried in a handover request message, or carried in a context message of the terminal.

29. The communication system according to claim 26 or 27, wherein the communication system further comprises the terminal, and if the terminal sends the first information, the first information is carried in a radio resource control RRC resume request message.

30. The communication system according to any one of claims 26 to 29, wherein
the task apparatus is further configured to send, to the target access apparatus, a task result corresponding to the terminal; and
the target access apparatus is further configured to send the task result to the terminal.

31. The communication system according to any one of claims 26 to 30, wherein the communication system further comprises the terminal;
the terminal is configured to: obtain a task result corresponding to the task apparatus, and send the task result to the target access apparatus; and
the target access apparatus sends the task result to the task apparatus.

32. The communication system according to claim 26, wherein the communication system further comprises a mobility management function;
the task apparatus is configured to send a request message to the mobility management function, wherein the request message comprises the information about the terminal and indicates to obtain the information about the target access apparatus corresponding to the terminal; and
the mobility management function is used to send, to the task apparatus, the information about the target access apparatus corresponding to the terminal.

33. The communication system according to any one of claims 26 to 32, wherein the information about the apparatus comprises identification information of the apparatus or an Internet protocol IP address of the apparatus.

34. A communication apparatus, wherein the communication apparatus is configured to perform the method according to any one of claims 1 to 10, perform the method according to any one of claims 11 to 16, perform the method according to any one of claims 17 to 22, or perform the method according to any one of claims 23 to 25.

35. A communication apparatus, wherein the communication apparatus comprises a processor, and the processor is coupled to a memory;
the memory is configured to store a computer program or instructions; and
the processor is configured to execute the computer program or the instructions stored in the memory, to enable the apparatus to perform the method according to any one of claims 1 to 10.

36. A communication apparatus, wherein the communication apparatus comprises a processor, and the processor is coupled to a memory;
the memory is configured to store a computer program or instructions; and
the processor is configured to execute the computer program or the instructions stored in the memory, to enable the apparatus to perform the method according to any one of claims 11 to 16.

37. A communication apparatus, wherein the communication apparatus comprises a processor, and the processor is coupled to a memory;
the memory is configured to store a computer program or instructions; and
the processor is configured to execute the computer program or the instructions stored in the memory, to enable the apparatus to perform the method according to any one of claims 17 to 22.

38. A communication apparatus, wherein the communication apparatus comprises a processor, and the processor is coupled to a memory;
the memory is configured to store a computer program or instructions; and
the processor is configured to execute the computer program or the instructions stored in the memory, to enable the apparatus to perform the method according to any one of claims 23 to 25.

39. A computer-readable storage medium, comprising a program or instructions, wherein when the program or the instructions are run by a processor, the method according to any one of claims 1 to 10 is performed, the method according to any one of claims 11 to 16 is performed, the method according to any one of claims 17 to 22 is performed, or the method according to any one of claims 23 to 25 is performed.

40. A communication system, wherein the communication system comprises the communication apparatus according to claim 35 and the communication apparatus according to claim 36.

41. The communication system according to claim 40, wherein the communication system further comprises the communication apparatus according to claim 37.

42. The communication system according to claim 40 or 41, wherein the communication system further comprises the communication apparatus according to claim 38.
